**Europäisches Patentamt**

(19) **European Patent Office**

**Office européen des brevets**

(11) Veröffentlichungsnummer: **0 006 618**
**B1**

(12) # EUROPÄISCHE PATENTSCHRIFT

(45) Veröffentlichungstag der Patentschrift:
28.07.82

(51) Int. Cl.³: **C 02 F 1/42, C 11 D 3/08 //**
**C01B33/28**

(21) Anmeldenummer: 79102150.4

(22) Anmeldetag: 28.06.79

(54) **Verwendung von Alumosilikat-Granulat als Kationen-austauscher.**

(30) Priorität: 03.07.78 DE 2829165

(43) Veröffentlichungstag der Anmeldung:
09.01.80 Patentblatt 80/1

(45) Bekanntmachung des Hinweises auf die Patenterteilung:
28.07.82 Patentblatt 82/30

(84) Benannte Vertragsstaaten:
**BE CH FR GB IT LU NL SE**

(56) Entgegenhaltungen:
**DE-A-1 567 543**
**DE-A-1 667 547**
**DE-A-2 016 838**
**DE-A-2 412 837**
**DE-A1-2 524 484**
**DE-A1-2 707 313**
**DE-B-1 195 730**
**DE-B2-1 567 557**
**DE-B2-1 567 566**
**DE-C-1 203 238**

(73) Patentinhaber: **Henkel Kommanditgesellschaft auf Aktien, Postfach 1100 Henkelstrasse 67, D-4000 Düsseldorf 1 (DE)**

(72) Erfinder: **Smolka, Heinz Gerd, Dr., Senliser Strasse 32, D-4018 Langenfeld (DE)**
Erfinder: **Köppelmann, Edgar, Dr., Am Eichelkamp 166, D-4010 Hilden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verwendung von Alumosilikat-Granulat als Kationenaustauscher

Die Erfindung betrifft die Verwendung von kationenaustauschendem Alkalialumosilikat-Granulat zur Entfernung der Härtebildner des Wassers beim Waschen und Reinigen, insbesondere beim Waschen von Textilien und beim Reinigen von Geschirr mit Führung der Flotte im Kreislauf.

Als eine Möglichkeit zur Verringerung der Gewässereutrophierung durch Waschmittelphosphate sind bereits z.B. aus den deutschen Offenlegungsschriften 2 543 946 und 2 556 827 Wasch- und Reinigungsverfahren mit Führung der Flotte im Kreislauf bekannt. Bei diesen Verfahren werden die Härtebildner des Wassers aus der Flotte durch Ionenaustauscher entfernt. Als hierfür geeignete Ionenaustauscher werden u.a. synthetisch hergestellte Alkalialumosilikate, im folgenden kurz «Alumosilikat» genannt, mit einem hohen Kationenaustauschvermögen eingesetzt. Wegen ihrer leichteren Handhabung sind körnige, granulierte Alumosilikate besser geeignet als feinteilige Alumosilikate.

Granulierte Alumosilikate sind seit langem für Adsorptionszwecke oder als Träger für Katalysatoren bekannt. Als Bindemittel für die Granulat-Bildung werden dabei inerte oder aktive Stoffe verwendet. Soweit als Bindemittel inerte Stoffe wie z.B. Tone oder amorphe Kieselsäuren eingesetzt werden, weisen die so hergestellten Granulate aufgrund ihres durch den Bindemittelanteil verringerten Alumosilikat-Gehalts eine verringerte Adsorptions-Kapazität und dementsprechend auch eine geringere Ionenaustausch-Kapazität auf, weshalb sie für Ionenaustauschzwecke schlechter geeignet sind.

Es sind aber auch Alumosilikat-Granulate bekannt, die aktive Bindemittel enthalten. So wird bei dem in der deutschen Patentschrift 1 203 238 beschriebenen Verfahren zur Herstellung von Alumosilikatformlingen Alumosilikat als Granulier-Bindemittel verwendet. Hierzu geht man von Alumosilikat-Granulat aus, das man durch Vermischen von Alumosilikat-Pulver mit einem wässrigen Kieselsäuresol oder einer wässrigen Alkalisilikat-Lösung unter Granulat-Bildung und anschliessendem Trocknen erhält. Durch eine Behandlung dieses Granulats mit alkalischer Aluminat-Lösung bildet man dann das Alumosilikat-Bindemittel, welches seinerseits ebenfalls einen Beitrag zur Adsorptionsleistung der Molekularsiebformlinge leistet und dem Verfahrensprodukt gleichzeitig eine für die Verwendung als Adsorptionsmittel erwünschte hohe Festigkeit gegenüber mechanischer Beanspruchung verleiht. Aus der DE-A-2 016 838 sind Alumosilikate zur Trocknung und Reinigung von Gasen und Flüssigkeiten bekannt. Diese Granulate bestehen aus pulverförmigen Zeolithen vom Faujasit-Typ und A-Typ, die mit einem Kieselgel gebunden werden, welches anschliessend mit Aluminat-Lösung und Natronlauge zeolithisiert wird. Die DE-A1-2 524 484 beschreibt die Herstellung von Granulaten aus Zeolith A, X oder Y, der mit amorphem $SiO_2$ gebunden wird. Die Zeolithisierung des $SiO_2$-Bindemittels erfolgt nach Zugabe von $Al_2O_3$, $Na_2O$ und Wasser und anschliessender Alterung bei erhöhten Temperaturen. Es entsteht ein Granulat hoher Festigkeit für Adsorptionszwecke. Die hohe Festigkeit bringt es aber mit sich, dass diese für den Einsatz in Trennapparaturen als Molekularsiebe konzipierten Produkte für die Verwendung als Ionenaustauscher in Waschflotten nicht geeignet sind. Ihre Austauschgeschwindigkeit ist zu gering, und im Kontakt mit der auf 30–95 °C aufgeheizten Waschflotte tritt ein teilweiser Zerfall in feinteiliges Alumosilikat auf. Wollte man beim Waschen in hartem Wasser mit den bekannten handelsüblichen Alumosilikat-Granulaten trotzdem eine ausreichende Enthärtung erzielen, müsste der Waschprozess verlängert werden, oder es müsste eine wesentlich grössere Menge Alumosilikat-Granulat, das aber nur unvollständig ausgenutzt würde, eingesetzt werden. Zur Vermeidung der Aufnahme der entstandenen Feinanteile durch das Waschgut müssten ferner feinporige Filter in den Waschflotten-Kreislauf eingebaut werden, die einen entsprechend hohen Druckverlust im System verursachen. Hierdurch würde ausserdem die Gefahr des Zusetzens der Filter durch Flusen oder Schmutz vergrössert werden.

Die gleichen Nachteile wie die Produkte der deutschen Patentschrift 1 203 238 weisen auch die geformten Verfahrensprodukte der DE-B2-1 567 557 und DE-A1-2 707 313 auf. Sie werden aus kristallinem Zeolith mit pulverförmigem Metakaolin als Bindemittel erhalten, der mit Natriumhydroxid durch eine Wärmebehandlung in Zeolith umgewandelt wird. Diese Produkte werden ebenfalls als Adsorptionsmittel verwendet.

Die Produkte der DE-B2-1 567 566 und DE-A-2 715 678, die durch Zeolithisierung von ausschliesslich Metakaolin mit Natriumhydroxid in der Wärme unter Extrusion zu geformten Teilchen erhalten werden, finden ebenfalls in Adsorptionsanlagen Verwendung und weisen gleichfalls die schon beschriebenen Nachteile solcher Produkte auf. Aus demselben Grund sind auch Produkte, wie sie in der DE-B-1195 730 beschrieben sind, als Ionenaustauscher für Waschflotten unbrauchbar. Bei den in diesen Anmeldungen beschriebenen Produkten werden Kaolin-Formkörper als Ausgangsmaterial für Zeolith-Formkörper durch eine nachfolgende Behandlung in Zeolith umgewandelt und mit einer wässrigen, Oxide des Siliciums, Aluminiums und eines Alkalimetalls enthaltenden Lösung gebunden.

Die bekannten Alumosilikat-Granulate weisen häufig den weiteren Nachteil auf, dass der Alkaligehalt des Bindemittels sehr hoch ist, was die Ursache für eine oft unerwünschte pH-Wert-Erhöhung der Wasch- und Reinigungsflotten ist, die mit dem Alumosilikat-Granulat zum Enthärten in Kontakt gebracht werden.

Ein weiterer Nachteil der Verfahren des Standes der Technik zur Herstellung von alumosilikatgebundenem Granulat besteht in der Notwendigkeit, das Verfahrensprodukt durch mehrere aufeinanderfolgende Verfahrensschritte herzustellen. Hierdurch kann die Reproduzierbarkeit der Verfahrensprodukte verschlechtert werden, und man erhält Alumosilikat-Granulate mit wechselnden Eigenschaften.

Aufgabe der vorliegenden Erfindung ist daher die Verwendung eines einfach hergestellten Alumosilikat-Granulats mit hoher Kationenaustauschleistung zur Entfernung der Härtebildner des Wassers beim Waschen und Reinigen, wobei das Granulat insbesondere unter den Bedingungen des Waschens von Textilien beziehungsweise Reinigens von Geschirr mit Führung der Flotte im Kreislauf stabil ist.

Gegenstand der Erfindung ist daher die Verwendung von Alumosilikat-Granulat mit Alumosilitat als Bindemittel, hergestellt in üblichen Granulatoren durch Granulieren von feinteiligem Alumosilikat-Pulver mit wässriger Alkalisilikat-Lösung oder wässrigem Kieselsäuresol und sauer hydrolysierenden Aluminiumsalzen und/oder Alkalialuminat und anschliessendes Trocknen des Granulats, indem man

a) zu einem feinteiligen, gebundenes Wasser enthaltenden kristallinen Alumosilikat-Pulver der molaren Zusammensetzung 0,7–1,5 $Kat_{2/n}$ $O \cdot Al_2O_3 \cdot 0,8$–$6 SiO_2$ (Kat = ein Kation der Wertigkeit n) mit einer Teilchengrösse unter 30 μ und einem Calciumbindevermögen von 50–200 mg CaO/g wasserfreiem Alumosilikat

i) m Mol $SiO_2$ in Form einer wässrigen Lösung eines Alkalisilikats der molaren Zusammensetzung 1 $Na_2O \cdot 1$–$3,5 SiO_2$ oder eines wässrigen Kieselsäuresols mit einem $SiO_2$-Gehalt von jeweils ca. 10 bis 40 Gew.-% und

ii) n Mol $Al_2O_3$ in Form von sauer hydrolysierenden Aluminiumsalzen, vorzugsweise Aluminiumsulfat, und/oder Alkalialuminat jeweils als Pulver und/oder als wässrige Lösung gleichzeitig oder nacheinander hinzugibt,
wobei die Gesamtmenge an zugesetztem $SiO_2$ 5–30 Gewichtsprozent – bezogen auf das aus Alumosilikat-Pulver und zugesetztem $SiO_2$ bestehende Feststoff-Gemisch – ausmacht und das Verhältnis von m:n etwa 1:1 bis 5:1 beträgt,

b) diese Stoffe 1–120 Minuten, vorzugsweise 5–60 Minuten bis zur gleichmässigen Aufnahme der Feuchtigkeit durch die Feststoffe unter Bildung eines Granulats mit einer Teilchengrösse von 0,05–1 mm, vorzugsweise 0,1–0,5 mm, vermischt, und

c) das erhaltene Granulat 0,5–30, vorzugsweise 10–30 Stunden bei 80–150°C, vorzugsweise 100–130°C trocknet
als Kationenaustauscher zur Enthärtung von Wasser bei Wasch- und Reinigungsprozessen in getrennt von Wasch- und Reinigungsbehältern angeordneten Ionenaustauschervorrichtungen.

Die Herstellung von geeigneten Alumosilikaten als Ausgangsmaterial ist beispielsweise in der DE-A-2 412 837 beschrieben. Nach den in dieser Patentanmeldung angegebenen Herstellungsverfahren lassen sich verschiedene Arten von Alumosilikaten erhalten; besonders leicht zugänglich und wegen ihres hohen Kationenaustauschvermögens bevorzugt sind Alumosilikate vom NaA- und NaX-Typ. Sie fallen bei der Herstellung in einer Teilchengrösse unter 30 μ an.

Die Granulation erfolgt in bekannten Mischgranulatoren unter Zugabe von $SiO_2$- und $Al_2O_3$-haltigen Verbindungen und Wasser. Ein geeigneter Granulator ist beispielsweise der «EIRICH-Gegenstrom-Mischgranulator», dessen Aufbau und Wirkungsweise in «Aufbereitungstechnik», 1970, Heft 5, S. 272 beschrieben sind. Ebenfalls geeignet ist eine Granuliertrommel vom Typ des LÖDIGE-Mischers, wie sie in «Aufbereitungstechnik», 1970, Heft 5, S. 263 beschrieben ist.

Die Vermischung des feinteiligen Alumosilikats mit den Bindemittel-Ausgangsstoffen in den Granulatoren kann auf verschiedene Weise erfolgen. Bei einer bevorzugten Variante vermischt man das Alumosilikat-Pulver mit Aluminat-Pulver trocken und führt durch langsame Zugabe einer wässrigen Silikat-Lösung unter teilweiser oder vollständiger Umsetzung des Silikats mit dem Aluminat zu Alumosilikat-Bindemittel die Granulat-Bildung herbei. Bei einer weiteren Variante, die ebenfalls bevorzugt ist, granuliert man das Alumosilikat-Pulver zunächst unter Zugabe einer wässrigen Aluminat- und/oder Aluminiumsalz-Lösung. Das Granulat besprüht man dann, gegebenenfalls nach einer Zwischentrocknung, mit einer Silikat-Lösung oder einem wässrigen Kieselsäuresol. Diese beiden Verfahrensschritte können in besonders bevorzugter Weise auch gleichzeitig durchgeführt werden, indem man zu dem Alumosilikat-Pulver im Mischer gleichzeitig eine Aluminat- und/oder Aluminiumsalz-Lösung und eine Silikat-Lösung hinzufügt, wobei man als sauer hydrolysierendes Aluminiumsalz Aluminiumsulfat bevorzugt. Die Verwendung von sauer hydrolysierenden Aluminiumsalzen führt zur Bildung von Alumosilikat-Bindemittel mit verringertem Alkaliüberschuss. Hieraus resultiert eine Verringerung einer oftmals unerwünschten Alkaliabgabe an die Wasch- und Reinigungsflotten, die zur Entfernung der Härtebildner mit dem Granulat in Kontakt gebracht werden. Sauer hydrolysierende Aluminiumsalze können das Aluminat ganz oder teilweise als $Al_2O_3$-Quelle ersetzen, wenn Granulate mit entsprechend alkaliarmem Bindemittel erwünscht sind. Aluminat und Aluminiumsalz können statt in gelöster Form auch als Pulver dem Alumosilikat-Pulver zugesetzt werden. Die Granulat-Bildung erfolgt dann bei Zugabe der Silikat-Lösung. Bei dieser Verfahrensweise erübrigt sich eine sonst eventuell erforderliche Zwischentrocknung. Eine weitere Verfahrensweise geht von einem Brei aus Alumosilikat-Pulver und wässriger Silikat-Lösung aus. Die Granulat-Bildung führt man dabei durch Zugabe von weiterem Alumosilikat-Pulver sowie von Aluminat-Pulver herbei, wobei das molare Verhältnis von $SiO_2$ zu $Al_2O_3$ im Bindemittel bei etwa 1:1 bis 5:1 liegt und die Gesamtmenge an zugesetztem $SiO_2$ 5–30 Gew.-% (bezogen auf das aus Alumosilikat-Pulver und zu-

gesetztem $SiO_2$ bestehende Feststoff-Gemisch) ausmacht.

Bei der Granulat-Bildung bilden sich Granulate mit einem Partikel-Durchmesser von unter 2 mm. Die gewünschte Partikelgrösse beträgt 0,05–1 mm, wobei 0,1–0,5 mm besonders bevorzugt sind; diese Fraktion erhält man z.B. durch Windsichten oder Sieben. Überkorn wird auf diese Partikelgrösse vermahlen, Unterkorn durch nochmaliges Eindüsen in den Granulator auf die gewünschte Partikelgrösse gebracht. Eine Partikelgrösse von 0,05–1 mm ist die hinsichtlich Handhabung und Ionenaustauschgeschwindigkeit günstigste Grösse; die Fraktion 0,1–0,5 weist dabei optimale Eigenschaften auf.

Nach der Granulat-Bildung erfolgt eine Trocknung des Granulats durch 0,5–30, vorzugsweise 10–30 Stunden langes Erhitzen auf 80–150°C, vorzugsweise 100–120°C. Durch die Trocknung erfolgt gleichzeitig eine Umwandlung von als Bindemittel wirksamen amorphem Alumosilikat zu kristallinem Alumosilikat mit hohem Calciumbindevermögen.

Das so erhaltene Granulat weist gute Stabilität in kaltem und heissem Wasser auf. Sie beträgt 40–100%, gemessen nach der weiter unten beschriebenen Methode für die Bestimmung der Kornstabilität, wobei Granulate mit einer Stabilität von 70–100% besonders bevorzugt sind. Die Granulate weisen ferner ein hohes Austauschvermögen gegenüber den Härtebildnern des Wassers auf. Es beträgt 40–150 mg CaO/g wasserfreiem Alumosilikat nach der weiter unten angegebenen Bestimmungsmethode für das Calciumbindevermögen und liegt im allgemeinen zwischen 40 und 110 mg CaO/g wasserfreiem Alumosilikat.

Die Granulate finden erfindungsgemäss Verwendung als Kationenaustauscher zur Enthärtung des Wassers bei Wasch- und Reinigungsprozessen, insbesondere während des Waschens von Textilien und Reinigens von Geschirr unter Führung der Flotte im Kreislauf über ausserhalb der Wasch- bzw. Spülbehälter angebrachte Ionenaustauscher-Vorrichtungen entsprechend den deutschen Patentanmeldungen 2 543 946 und 2 556 827. Darüber hinaus werden die Alumosilikat-Granulate auch für die Vorenthärtung des zulaufenden Wasch- bzw. Spülwassers verwendet.

### Beispiele

Für die Herstellung von Alumosilikat-Granulat mit Alumosilikat als Bindemittel wurde von getrocknetem, feinteiligem kristallinem Alumosilikat vom Typ NaA ausgegangen, das noch ca. 20 Gew.-% gebundenes Wasser enthielt. Die Herstellung des verwendeten Alumosilikats ist in der DE-A-2 412 837 auf S. 28 für das «Alumosilikat I» beschrieben. Es wies eine Zusammensetzung von 0,9 Mol $Na_2O \cdot 1$ Mol $Al_2O_3 \cdot 2,04$ Mol $SiO_2 \cdot 4,3$ Mol $H_2O$ auf und hatte ein Calciumbindevermögen von 150 mg CaO/g wasserfreiem Alumosilikat, gemessen nach der in der DE-A-2 412 837 angegebenen Bestimmungsmethode. Mit anderen Alumosilikaten erhält man im Prinzip die gleichen Resultate, wenn sie ein gutes Calciumbindevermögen aufweisen. So sind z.B. hoch austauschfähige Kaliumzeolithe und Natriumalumosilikate vom Typ NaX ebenfalls zur Herstellung gut geeignet.

### Beispiel 1

In einem Mischgranulator mit Zerhacker der Fa. Lödige wurden 16,4 kg Natriumalumosilikat-Pulver mit 1,3 kg Natriumaluminat (1,3 Mol $Na_2O \cdot 1$ Mol $Al_2O_3$) trocken vorgemischt. Hierzu wurde unter ständigem Mischen innerhalb von 24 Minuten eine Lösung von 5,8 kg Natriumsilikat der Zusammensetzung 8,0 Gew.-% $Na_2O$, 26,9 Gew.-% $SiO_2$ und 65,1 Gew.-% $H_2O$ in 4 l entionisiertem Wasser unter Granulat-Bildung zugegeben. Nach Zugabe der Silikat-Lösung wird noch weitere 5 Minuten gemischt und dann das Granulat getrocknet (110°C, 24 Stunden). Die Fraktion mit 0,2–0,4 mm Körngrösse (Produkt 1) wurde auf Kornstabilität und Calciumbindevermögen unter folgenden Bedingungen geprüft:

### Kornstabilität

In eine senkrecht stehende am oberen und am unteren Ende mit einem Gewebe (Maschenweite 0,06 mm) verschliessbare Vigreux-Kolonne (30 cm lang, Durchmesser: 5 cm) wird eine Menge von 6 g Granulat eingewogen. Die Kolonne wird an einen Thermostaten so angeschlossen, dass sie im Kreislauf von temperiertem Wasser durchströmt werden kann. Durch ein zeitgesteuertes Magnetventil wird die Strömungsrichtung so gesteuert, dass eine Strömung von unten nach oben 2 Sekunden lang und von oben nach unten 1,5 Sekunden lang erfolgt. Der Durchfluss beträgt während der Strömung in beiden Richtungen 4 l/min. Dieser Rhythmus im Strömungswechsel wird 45 Minuten lang bei einer Wassertemperatur von 90°C beibehalten. Das Granulat wird nach dem Abfiltrieren 24 h bei 130°C getrocknet. Der Siebrückstand auf einem Sieb von 0,1 mm Maschenweite wird in %, bezogen auf die Einwaage, angegeben. Ist der Anteil mit einer Korngrösse > 0,1 mm mindestens 40%, liegt eine für die erfindungsgemässe Verwendung ausreichende Stabilität vor.

### Calciumbindevermögen

1 Liter einer wässrigen, 0,396 g $CaCl_2$ = (200 mg CaO/l = 20°dH) enthaltenden und mit verdünnter NaOH auf einen pH-Wert von 10 eingestellten Lösung wird mit 1 g Alumosilikat-Granulat versetzt (auf wasserfreies Granulat bezogen). Dann wird die Suspension 10 Minuten lang bei 50°C mit 500 UpM mit einem Blattrührer gerührt. Nach Abfiltrieren des Granulats bestimmt man die Resthärte x des Filtrats. Daraus errechnet sich das Calciumbindevermögen für das Granulat zu $(20 - x)x$ 10 mg CaO/g wasserfreies Alumosilikat-Granulat. Ein Calciumbindevermögen von wenigstens ca. 40 mg CaO/g ist für eine erfindungsgemässe Verwendung ausreichend.

Die Eigenschaften der in den Beispielen erhaltenen Produkte sind in der Tabelle aufgeführt und mit einem handelsüblichen Alumosilikat-Granulat verglichen.

Beispiel 2

In einen Gegenstrommischer vom Typ Eirich MPM-Mischer wurden 25 kg Alumosilikat- und 3,0 kg Natriumaluminat (1,3 Mol $Na_2O \cdot 1$ Mol $Al_2O_3$) Pulver trocken vorgemischt. Unter weiterem Mischen und Granulat-Bildung wurde auf das Pulvergemisch eine Silikatlösung aus 11,2 kg des Natriumsilikats aus Beispiel 1 in 7,8 kg entionisiertem Wasser gesprüht, wobei nach jeweils 5 Minuten Sprühzeit eine reine Mischzeit ohne Sprühen von ebenfalls 5 Minuten eingehalten wurde. Trocknung und Prüfung des Granulats (Produkt 2) erfolgten wie in Beispiel 1.

Beispiel 3

In einem Gegenstrommischer vom Typ Eirich MPM-Mischer wurden 25 kg Alumosilikat-Pulver (mittlere Teilchengrösse 4–5 μ), 3 kg $Al(OH)_3$ und 1 kg NaOH trocken vorgemischt. Auf dieses Pulvergemisch wurde unter weiterem Mischen und Granulat-Bildung eine Silikatlösung aus 8,1 kg des Natriumsilikats aus Beispiel 1 in 6,3 l entionisiertem Wasser gesprüht, wobei nach jeweils 5 Minuten Sprüheinheit, in denen je $^1/_3$ der Silikatlösung aufgesprüht wurde, eine Mischzeit ohne Sprühen von 4 Minuten eingehalten wurde. Nach Zugabe der Silikatlösung wurde noch 5 Minuten nachgemischt. Trocknung und Prüfung des Granulats (Produkt 3) erfolgten wie in Beispiel 1.

Beispiel 4

In einem Labormischer (Typ Bosch, «Universal», mit 2 rotierenden Quirleinsätzen) wurden 250 g Alumosilikat zuerst mit einer Lösung aus 27 g Natriumaluminat (1,3 Mol $Na_2O \cdot 1$ Mol $Al_2O_3$) und 60 g Wasser unter Granulat-Bildung gesprüht. Das Granulat wurde bei 130°C getrocknet und danach mit einer Lösung aus 86,4 g des Natriumsilikats von Beispiel 1 und 60 g Wasser besprüht. Trocknung und Prüfung des Granulats (Produkt 4) erfolgten wie in Beispiel 1 beschrieben.

Beispiel 5

205 g feinteiliges handelsübliches Natriumalumosilikat des Typs NaX (Zeolith 13 x, UCC) der Zusammensetzung 1,06 Mol $Na_2O \cdot 1$ Mol $Al_2O_3 \cdot 2,48$ Mol $SiO_2$ das 2,0 Gew.-% gebundenes Wasser enthielt, wurden in einem Labormischer (Bosch «Universal», mit 2 rotierenden Quirleinsätzen zusammen mit 30 g $NaAlO_2$ mit einer Teilchengrösse < 100 μ) gemischt und aus einer Sprühpistole mit einer wässrigen Lösung aus 95 g eines Natriumsilikats der Zusammensetzung 8,0 Gew.-% $Na_2O$, 26,9 Gew.-% $SiO_2$, 65,1 Gew.-% $H_2O$ in 80 g Wasser besprüht. Nach dem Trocknen (130°C, 24 Stunden) wies das Granulat (Produkt 5) die in der Tabelle aufgeführten Eigenschaften auf.

Beispiel 6

In einem Labormischer (Typ Bosch, «Universal», mit 2 rotierenden Quirleinsätzen) wurden 300 g Alumosilikat vorgelegt und mit einer Mischung aus einer Silikatlösung, bestehend aus 28,2 g des Natriumsilikats von Beispiel 1 und 27,7 g $H_2O$ und einer Aluminatlösung, bestehend aus 33,1 g NaOH, 24,4 g $Al(OH)_3$ und 85 g $H_2O$ gleichzeitig innerhalb von 2,5 Minuten unter Granulatbildung besprüht. Nach Abschluss der Granulatbildung wurden nochmals 50 g Alumosilikat untergemischt. Trocknung und Prüfung des Granulats (Produkt 6) erfolgten wie in Beispiel 1 beschrieben.

Beispiel 7

In einem Labormischer (Typ Bosch «Universal», mit 2 rotierenden Quirleinsätzen) wurden 150 g Alumosilikat-Pulver mit 86,4 g des Natriumsilikats von Beispiel 1 und 60 g Wasser zu einem homogenen Brei vermischt. Innerhalb von 10 Minuten wurde dann ein pulvriges Gemisch aus 100 g Alumosilikat und 27 g Natriumaluminat (1,3 Mol $Na_2O \cdot 1$ Mol $Al_2O_3$) portionsweise zugemischt, wobei sich ein Granulat ausbildete. Trocknung und Prüfung des Granulats (Produkt 7) erfolgten wie in Beispiel 1 beschrieben.

Beispiel 8

Dieses Beispiel beschreibt die Herstellung eines Granulats, das bei der Suspension in Wasser infolge eines geringeren Alkaligehaltes im Bindemittel Alumosilikat weniger Alkali an das Wasser abgibt und damit einer gegebenenfalls unerwünschten pH-Wert-Erhöhung entgegenwirkt. In einem Mischgranulator mit Zerhacker der Fa. Lödige wurden 28,5 kg Alumosilikat mit 6,1 kg Natriumaluminat (1,3 Mol $Na_2O \cdot 1$ Mol $Al_2O_3$) und 5,7 kg $Al_2(SO_4)_3$ trocken vorgemischt. Die Granulatbildung erfolgte nach Zugabe einer Silikatlösung, bestehend aus 9,3 kg des Natriumsilikats von Beispiel 1. Trocknung und Prüfung des Granulats (Produkt 8) erfolgten wie in Beispiel 1 beschrieben. Der pH-Wert einer wässrigen Suspension von 10 g Granulat/1, gemessen nach 15 Minuten langem Rühren, liegt bei Produkt 8 bei 9,3, während er bei Produkt 1 bei 11,8 liegt.

Tabelle

| Produkt | Kornstabilität % | Calciumbindevermögen mg CaO/g |
|---|---|---|
| 1 | 75 | 88 |
| 2 | 75 | 77 |
| 3 | 84 | 95 |
| 4 | 78 | 96 |
| 5 | 75 | 96 |
| 6 | 40 | 98 |
| 7 | 45 | 88 |
| 8 | 75 | 88 |
| handelsübl. * | 100 | 6 |

* GRACE 4 A, 1,5–2,5 mm

**Patentansprüche**

1. Verwendung von Alumosilikat-Granulat mit Alumosilikat als Bindemittel, hergestellt in üblichen Granulatoren durch Granulieren von feinteiligem Alumosilikat-Pulver mit wässriger Alkalisilikat-Lösung oder wässrigem Kieselsäuresol und sauer hydrolysierenden Aluminiumsalzen und/oder Alkalialuminat und anschliessendes Trocknen des Granulats, indem man

a) zu einem feinteiligen, gebundenes Wasser enthaltenden kristallinen Alumosilikat-Pulver der molaren Zusammensetzung 0,7–1,5 $Kat_{2/n}$ $O \cdot Al_2O_3 \cdot 0,8$–6 $SiO_2$ (Kat = ein Kation der Wertigkeit n) mit einer Teilchengrösse unter 30 $\mu$ und einem Calciumbindevermögen von 50–200 mg CaO/g wasserfreiem Alumosilikat

i) m Mol $SiO_2$ in Form einer wässrigen Lösung eines Alkalisilikats der molaren Zusammensetzung 1 $Na_2O \cdot 1$–3,5 $SiO_2$ oder eines wässrigen Kieselsäuresols mit einem $SiO_2$-Gehalt von jeweils ca. 10 bis 40 Gew.-% und

ii) n Mol $Al_2O_3$ in Form von sauer hydrolysierenden Aluminiumsalzen, vorzugsweise Aluminiumsulfat, und/oder Alkalialuminat jeweils als Pulver und/oder als wässrige Lösung gleichzeitig oder nacheinander hinzugibt,
wobei die Gesamtmenge an zugesetztem $SiO_2$ 5–30 Gew.-% – bezogen auf das aus Alumosilikat-Pulver und zugesetztem $SiO_2$ bestehende Feststoff-Gemisch – ausmacht und das Verhältnis von m:n etwa 1:1 bis 5:1 beträgt,

b) diese Stoffe 1–120 Minuten, vorzugsweise 5–60 Minuten bis zur gleichmässigen Aufnahme der Feuchtigkeit durch die Feststoffe unter Bildung eines Granulats mit einer Teilchengrösse von 0,05–1 mm, vorzugsweise 0,1–0,5 mm, vermischt, und

c) das erhaltene Granulat 0,5–30 Stunden, vorzugsweise 10–30 Stunden bei 80–150 °C, vorzugsweise 100–130 °C trocknet
als Kationenaustauscher zur Enthärtung von Wasser bei Wasch- und Reinigungsprozessen in getrennt von den Wasch- und Reinigungsbehältern angeordneten Ionenaustauschervorrichtungen.

2. Verwendung nach Anspruch 1 zur Enthärtung des Waschwassers während des Waschens von Textilien unter Führung der Waschflotte über den ausserhalb des Waschbehälters angeordneten Kationenaustauscher im Kreislauf.

3. Verwendung nach Anspruch 1 als Kationenaustauscher zur Vorenthärtung des Waschwassers beim Waschen von Textilien.

4. Verwendung nach Anspruch 1 zur Enthärtung des Wassers beim Reinigen von Geschirr.

5. Verwendung nach Anspruch 4 zur Enthärtung des Wassers während des Reinigens von Geschirr unter Führung der Spülflotte über den Kationenaustauscher im Kreislauf.

6. Verwendung nach Anspruch 4 zur Vorenthärtung des Wassers beim Reinigen von Geschirr.

### Claims

1. The use of alumosilicate granulate containing alumosilicate as binder, produced in standard granulators by granulating fine alumosilicate powder with aqueous alkali silicate solution or aqueous silica sol and acid-hydrolysing aluminium salts and/or alkali aluminate and subsequently drying the granulate by simultaneously or successively adding

a) to a fine crystalline alumosilicate powder containing bound water und having the molar composition 0.7–1.5 $Cat_{2/n}O \cdot Al_2O_3 \cdot 0.8$–6 $SiO_2$ (Cat = a cation having the valency n); a particle size of less than 30 $\mu$ and a calcium-binding power of from 50 to 200 mg of CaO/g of anhydrous alumosilicate,

i) m moles of $SiO_2$ in the form of an aqueous solution of an alkali silicate having the molar composition 1 $Na_2O \cdot 1$–3.5 $SiO_2$ or an aqueous silica sol, the $SiO_2$-content in either case amounting to between about 10 and about 40% by weight and

ii) n moles of $Al_2O_3$ in the form of acid-hydrolysing aluminium salts, preferably aluminium sulfate, and/or alkali aluminate – in either case as powders and/or aqueous solutions,
the total quantity of $SiO_2$ added amounting to between 5 and 30% by weight, based on the mixture of solids consisting of alumosilicate powder and added $SiO_2$, and the ratio of m to n amounting to between about 1:1 and 5:1,

b) mixing these substances for 1 to 120 minutes and preferably for 5 to 60 minutes until the moisture has been uniformly absorbed by the solids to form a granulate having a particle size of from 0.05 to 1 mm and preferably from 0.1 to 0.5 mm, and

c) drying the resulting granulate for 30 minutes to 30 hours and preferably for 10 to 30 hours at 80 to 150 °C and preferably at 100 to 130 °C,
as a cation exchanger for softening water in washing and cleaning processes in ion exchanger units arranged separately from the washing and cleaning containers.

2. The use claimed in Claim 1 for softening the washing water during the washing of textiles, the wash liquor circulating over the cation exchanger arranged outside the washing container.

3. The use claimed in Claim 1 as a cation exchanger for the presoftening of water in the washing of textiles.

4. The use claimed in Claim 1 for solftening water in the washing of dishes.

5. The use claimed in Claim 4 for solftening the water in the washing of dishes, the wash liquor circulating over the cation exchanger.

6. The use claimed in Claim 4 for the presoftening of water in the washing of dishes.

### Revendications

1. Utilisation d'un granulat d'alumosilicate, avec de l'alumosilicate comme liant, préparé dans des granulateurs usuels par granulation d'une poudre finement divisée d'alumosilicate avec une solution aqueuse des silicate alcalin ou un sel aqueux d'acide silicique et des sels d'aluminium hydrolysants acides et/ou un aluminate alcalin et séchage consécutif du granulat, où

a) à une poudre d'alumosilicate cirstallin finement divisée contenant de l'eau liée, de composition molaire 0,7–1,5 $cat_{2/n}O \cdot Al_2O_3 \cdot 0,8$–6

$SiO_2$ (cat = cation de valence n) ayant une dimension de particule inférieure à 30 $\mu$ et une capacité de fixation du calcium de 50–200 mg de CaO/g d'alumosilicate anhydre, on ajoute

i) m moles de $SiO_2$ sous forme d'une solution aqueuse d'un silicate alcalin de composition molaire 1 $Na_2O \cdot$ 1–3,5 $SiO_2$ ou d'un sol aqueux d'acide silicique ayant une teneur en $SiO_2$ dans chaque cas d'environ 10 à 40% en poids et

ii) n moles de $Al_2O_3$ sous forme de sels d'aluminium hydrolysants acides, de préférence de sulfate d'aluminium, et/ou d'un aluminate alcalin, chaque fois sous la forme de poudre et/ou de solution aqueuse, simultanément ou successivement, la quantité totale du $SiO_2$ ajouté représentant 5–30% en poids – par rapport au mélange de matières solides consistant en poudre d'alumosilicate et en $SiO_2$ ajouté – et le rapport m:n s'élevant à environ 1:1 à 5:1,

b) on mélange ces substances pendant 1 à 120 minutes, de préférence pendant 5 à 60 minutes jusqu'à absorption uniforme de l'humidité par les matières solides avec formation d'un granulat ayant une dimension de particule de 0,05–1 mm, de préférence de 0,1–0,5 mm, et

c) on sèche le granulat obtenu pendant 0,5–30 heures, de préférence 10–30 heures à 80–150 °C, de préférence à 100–130 °C, comme échangeur de cations pour l'adoucissement de l'eau dans les processus de lavage et de nettoyage dans des appareils échangeurs d'ions montés séparément par rapport aux récipients de lavage et de nettoyage.

2. Utilisation selon la revendication 1 pour l'adoucissement de l'eau de lavage pendant le lavage des textiles avec recyclage du bain de lavage en passant par un échangeur de cations monté à l'extérieur du récipient de lavage.

3. Utilisation selon la revendication 1 comme échangeur de cations pour le pré-adoucissement de l'eau de lavage dans le lavage des textiles.

4. Utilisation selon la revendication 1 pour l'adoucissement de l'eau dans le nettoyage de la vaisselle.

5. Utilisation selon la revendication 4, pour l'adoucissement de l'eau pendant le nettoyage de la vaisselle avec recyclage du bain de rinçage en passant par l'échangeur de cations.

6. Utilisation selon la revendication 4 pour le pré-adoucissement de l'eau dans le nettoyage de la vaisselle.